# EUROPÄISCHE PATENTSCHRIFT

(11) **EP 1 022 480 B1**
(45) Veröffentlichungstag und Bekanntmachung des Hinweises auf die Patenterteilung: **18.06.2003**
(21) Anmeldenummer: 99125457.4
(22) Anmeldetag: 21.12.1999
(51) Int. Cl.: F16D 65/22, F16D 51/50, F16D 65/08, F16D 63/00

(54) **Bremsanordnung für Fahrzeuge, insbesondere Kraftfahrzeuge**
Brake assembly for vehicles, in particular for motor vehicles
Installation de freinage pour véhicules, en particulier pour véhicules automobiles

(30) Priorität: 20.01.1999 DE 19902053
(43) Veröffentlichungstag der Anmeldung: 26.07.2000
(73) Patentinhaber: DaimlerChrysler AG, 70567 Stuttgart (DE)
(72) Erfinder: Mosler, Christian, 70374 Stuttgart (DE)

(56) Entgegenhaltungen:
- DE-A- 19 604 403
- GB-A- 1 266 294
- GB-A- 2 162 602
- US-A- 3 191 722

## Beschreibung

Die Erfindung betrifft eine Bremsanordnung für Fahrzeuge, insbesondere Kraftfahrzeuge gemäß dem Oberbegriff des Anspruches 1.

Bei aus der Praxis sowie aus der JP 063 37 027 A bekannten Bremsanprdnungen verläuft der Stellantrieb senkrecht zu einer zur Bremsenachse stehenden Radialebene und in Richtung der Schwenkebene des Spreizschlosses, das über seine Drucklasche und seinen Betätigungshebel gegen die Bremsbacken fixiert ist. Damit liegt der Stellantrieb in einem Bereich, der bauraumkritisch ist. Denn zur Verfügung steht bei den Rädern benachbarter Anordnung als Zugang zur Bremse nur der Radinnenraum, der radial nach außen durch die Radfelgen begrenzt ist und in dem der Radantrieb, die Radbremsen und die das Rad tragenden Teile unterzubringen sind. Letztere sind insbesondere bei unabhängigen Radaufhängungen durch den Radträger und Teile der am Radträger angreifenden Radführungsglieder gebildet, bei Starrachsen durch den Achskörper, wobei die Lagerung des Rades gegenüber dem Radträger oder dem Achskörper erfolgt.

Ist das Rad angetrieben, so ist die im Radträger oder auf dem Achsträger gelagerte Radnabe zudem so bemessen, dass die Antriebswelle hindurchgeführt werden kann. Belastungsbedingt sind meist auch Radlager großen Durchmessers unterzubringen.

Somit ist von radial innen ausgehend bereits ein verhältnismäßig großer Anteil des außen durch den Felgendurchmesser begrenzten Raumes belegt, wobei bezüglich der Bremsanordnung vorgesehene Kombinationen von Trommelbremse als Feststellbremse und Scheibenbremse als Fahrbremse zusätzliche Anforderungen setzen. Denn die Trommelbremse ist innerhalb des Scheibentopfes der Scheibenbremse anzuordnen, die schon aus Gründen der Bremsleistung und der erforderlichen Kühlung eine möglichst große Fläche haben soll, nach außen aber durch die Radfelge begrenzt ist. Dementsprechend kann auch der Innenraum nicht beliebig aufgeweitet werden und es ist die Zuordnung der Bremstrommel zu einem Axialbereich des Bremsscheibentopfes nötig, der einen möglichst großen radialen Freiraum ermöglicht. Damit ergeben sich Konflikte zu anderen im gleichen Bereich unterzubringenden Bauteilen, wie etwa zu den Antriebsgelenken angetriebener Räder bei unabhängigen Radaufhängungen, da auch die Antriebsgelenke einen großen Bauraumbedarf haben und eine zweckmäßige Zuführung des Stellantriebes auf das Spreizschloss erschweren. Entsprechendes gilt bei Achsen mit starrem Achskörper, da dieser im Bereich der mittleren Achsbrücke schon aus Belastungsgründen meist einen verhältnismäßig großen Durchmesser aufweist, der sich erst im Bereich der gegen die Achsenden auslaufenden Halsansätze verjüngt, wobei die Radlagerung im Regelfall den äußeren Halsenden zugeordnet ist und die über den Scheibentopf mit der Radnabe verbundene Bremsscheibe axial nach innen anschließt, somit nahe der im Durchmesser größeren mittleren Achsbrücke liegt.

Bremsanordnungen dieser Art sind in der im Oberbegriff des Anspruches 1 berücksichtigten Ausgestaltung darüber hinaus aus der GB 2 162 602 A bekannt und es sind in dieser bekannten Ausgestaltung die Drucklasche und der Betätigungshebel jeweils über Stützelemente gegen den Bremsträger abgestützt, die bei zur Schwenkachse von Drucklasche und Betätigungshebel senkrechter, den Bremsträger axial durchsetzender Zuführung beiderseits der Zuführung liegen und eine zur Zuführung parallele Erstreckung aufweisen.

Bei einer Bremsanordnung mit einer Trommelbremse (US 31 91 722), die als Betriebs- und Feststellbremse eingesetzt ist und bei der den Bremsbacken für den Einsatz als Betriebsbremse und für den Einsatz als Feststellbremse gesonderte Spreizeinrichtungen zugeordnet sind, sind die Bremsbacken im Falle des Einsatzes als Betriebsbremse durch einen hydraulischen Bremszylinder als Spreizeinrichtung beaufschlagt, der sich radial außen zwischen den Bremsbacken erstreckt. Die mechanisch beaufschlagte Spreizeinrichtung für die Feststellbremse ist demgegenüber radial nach innen verlagert und liegt damit in einem Bereich, der nur noch eine Zuführung auf die Spreizeinrichtung zulässt, die schräg nach radial innen verläuft, ihrerseits aber die Bremsbacken über Stirnflächen beaufschlagt, die zu den Tragflächen für die Bremsbeläge radial und in einer zur Trommelachse senkrechten Radialebene liegen. Die Spreizeinrichtungen sind jeweils zum Bremsträger fixiert und die von der radial inneren, der Feststellbremse zugehörigen Spreizeinrichtung beaufschlagten Stirnflächen sind an Zwischenhebeln als Übertragungselementen vorgesehen, die ihrerseits bei paralleler Erstreckung zu den Tragstegen der Bremsbacken an deren Tragstegen abgestützt sind, so dass die Wirkebene der Spreizeinrichtung winklig zur Erstreckungsebene der Zwischenhebel liegt, deren Stirnflächen von der Spreizeinrichtung beaufschlagt sind.

Bei einer weiteren bekannten Bremsanordnung (GB 20 02 071 A), die als Trommelbremse ausgebildet ist, ist eine Spreizeinrichtung mit schräg zur Trommelachse liegender Zuführung vorgesehen und es beaufschlagt die Spreizeinrichtung die Bremsbacken über von diesen getragene Winkelhebel, deren Schwenkachsen zur Trommelachse parallel verlaufen und Stellschrauben tragen, deren in Richtung auf die Spreizeinrichtung auslaufende, kalottenförmige Enden im Übergang zur Spreizeinrichtung über diese beaufschlagte, kalottenförmige Gleitschuhe tragen, durch deren Verstellbarkeit Verspannungen zwischen den Bremsbacken und der zum Bremsträger feststehenden Spreizeinrichtung vermieden werden sollen, und ein gleichmäßiger Bremsbelagverschleiss sowie eine möglichst großflächige Anlage der Bremsbeläge an der Bremstrommel erreicht werden soll.

Unter Nutzung der durch den zur Trommelachse geneigten Verlauf der Zuführung erreichbaren Vorteile soll eine Bremsanordnung der eingangs genannten Art durch die Erfindung im Hinblick auf die Vereinheitlichung der Produktion und eine größere Montageund Servicefreundlichkeit weitergebildet werden.

Erreicht wird dies durch die kennzeichnenden Merkmale des Anspruches 1, denen zu Folge bei zur Trommelachse geneigtem Verlauf der Zuführung und entsprechend geneigter Anordnung des Spreizschlosses die stirnseitig durch Drucklasche und Betätigungshebel beaufschlagten Endbereiche der Tragstege der Bremsbacken zur radialen Stegebene abgewinkelt in einer zur Zuführung senkrechten Ebene liegen. Dadurch ergeben sich hinsichtlich der Lage des Spreizschlosses zu den über dessen Drucklasche und Betätigungshebel beaufschlagten Endbereichen der Tragstege der Bremsbacken die gleichen Verhältnisse wie bei Bremsbacken, die bei zur Trommelachse parallelem Verlauf der Zuführung mit ihren Tragstegen auch in deren dem Spreizschloss benachbarten Endbereichen in einer zur Trommelachse senkrechten Radialebene liegen. Es bedarf deshalb im Hinblick auf erfindungsgemäße Anwendungsfälle keiner Änderungen am Spreizschloss in dessen Verbindung zu den Tragstegen und es ist damit auch die Voraussetzung für eine von Verschränkungen freie Verbindung geschaffen, die sich für die Fixierung des Spreizschlosses gegenüber den Tragstegen als vorteilhaft erweist, da sie mit den üblichen Spielen auskommt. Entsprechend bedarf es keiner Sonderformen des Spreizschlosses, so dass sich größere Fertigungslose erreichen lassen, es werden Verwechslungen bei der Montage vermieden und es wird die Service- und Montagefreundlichkeit gefördert.

Mit der erfindungsgemäßen Ausgestaltung wird auch die Voraussetzung dafür geschaffen, durch zum Verlauf der Zuführung parallele Erstreckung der Stützelemente bei geneigter Zuführung eine von Querkräften freie Abstützung des Spreizschlosses gegenüber dem Bremsträger zu realisieren, wobei die geneigte Anordnung der Stützelemente auch deren Zugänglichkeit verbessert. Ferner ist so auch bei geneigtem Verlauf der Zuführung die gleiche Bearbeitungsrichtung für die für die Zuführung und die Stützelemente notwendigen, bremsträgerseitigen Aufnahmen gegeben, wobei durch die so erreichte, verkantungsfreie Abstützung zwischen Stützelementen und Spreizschloss trotz des geneigten Verlaufes der Zuführung auch eine flächige Auflage gewährleistet ist, die im Hinblick auf Verschleiss und exakte Einstellbarkeit von Vorteil ist.

Weitere Einzelheiten und Merkmale der Erfindung ergeben sich aus den Unteransprüchen. Ferner wird die Erfindung mit weiteren Einzelheiten anhand der Zeichnungen näher erläutert.

Es zeigen:
- Figur 1: einen Querschnitt durch ein Achsende einer angetriebenen Starrachse eines Kraftfahrzeuges, teilweise schematisiert dargestellt, entsprechend Linie I-I in Figur 2,
- Figur 2: einen Schnitt gemäß Linie II-II in Figur 1 bei in die Zeichenebene geschwenkter Darstellung des Spreizschlosses und der Stützelemente,
- Figur 3: eine Ansicht einer Bremsbacke in Seitenansicht,
- Figur 4: eine Ansicht der Bremsbacke gemäß Figur 3 in Richtung des Pfeiles IV,
- Figur 5: eine erste Ausgestaltung eines Stützelementes in Bolzenform, zum Einpressen in die im Bremsträger vorgesehene Zuführung von der Radseite her,
- Figur 6: eine zweite Ausgestaltungsform eines Stützelementes, zum Einschrauben von der Radseite her,
- Figur 7: eine dritte Ausführungsform eines Stützelementes zum Einschrauben in die Zuführung im Bremsträger von der Achsmitte her,
- Figur 8: eine weitere Ausführungsform eines Stützelementes, zum Einpressen in die im Bremsträger vorgesehene Zuführung von der Achsmitte her, und
- Figur 9: eine Bremsanordnung gemäß der Erfindung mit Zuordnung einer als Feststellbremse dienenden Trommel zur Eingangsseite des Ausgleichsgetriebes einer angetriebenen Achse.

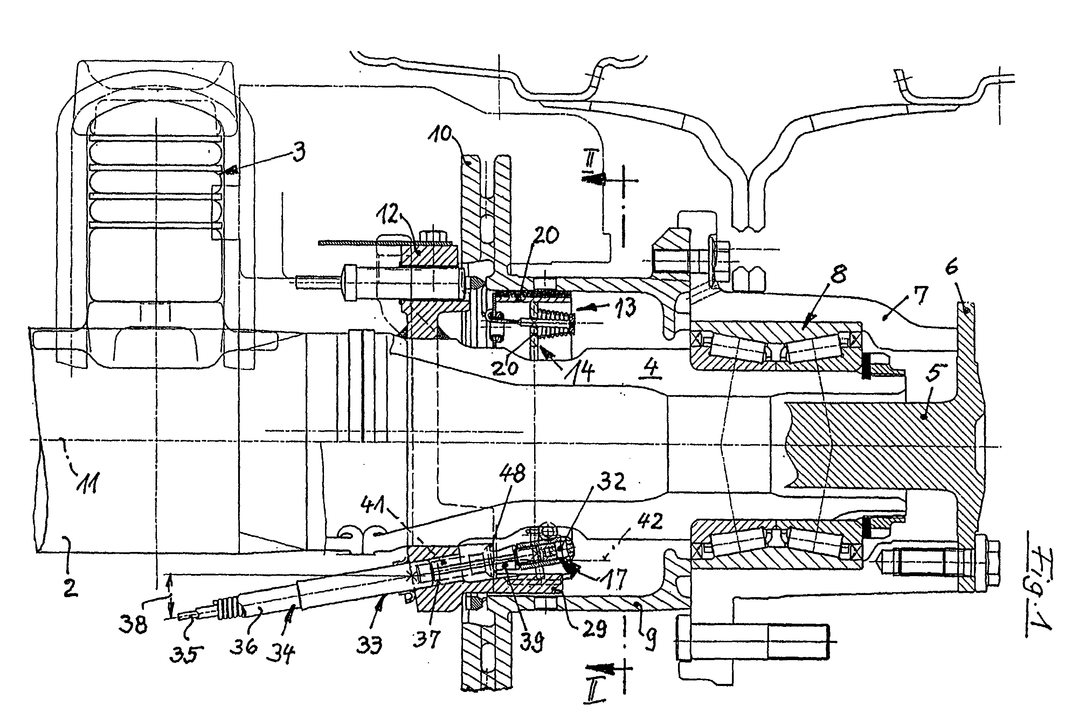

In Figur 1 ist, teilweise vereinfacht dargestellt, eine Bremsanordnung für ein Kraftfahrzeug in Verbindung mit einer Starrachse eines Nutzfahrzeuges dargestellt, wobei nur der von der Fahrzeuglängs- bzw. Achsmitte abgelegene äußere Achsbereich dargestellt ist und die Achse insgesamt mit 1 bezeichnet ist.

Die Achse 1 umfaßt einen als Brücke 2 bezeichneten mittleren Teil des Achskörpers, der beispielsweise über eine Blattfeder 3 gegenüber dem Aufbau geführt und abgestützt ist. Die durch die Blattfeder 3 gebildete Führung bzw. Abstützung liegt nahe dem von der Achsmitte abgelegenen äußeren Ende der Brücke 2, an das, wie in der Zeichnung symbolisch dargestellt, ein sich im Durchmesser verjüngender Achshals 4 angeschweißt ist. Die Brücke 2 und der mit dieser einstückige Hals 4 sind hohl ausgebildet und nehmen eine Antriebswelle 5 auf, von der hier nur das äußere Ende gezeigt ist und die in üblicher Weise von einem im Bereich der Achsmitte liegenden Achsgetriebe ausgeht. Die Antriebswelle 5 läuft an ihrem über den Hals 4 axial vorstehenden Ende in einen Flansch 6 aus, der drehfest mit der Radnabe 7 verbunden ist, welche in Richtung zur Achsmitte an den Flansch 6 anschließt und über ein Lager 8 auf dem Achshals 4 nahe dessen Ende drehbar geführt ist. An die Radnabe 7 schließt axial in Richtung zur Achsmitte der Scheibentopf 9 an, der an seinem der Achsmitte zugewandten Ende in die sich radial erstreckende Bremsscheibe 10 übergeht, wobei die Bremsscheibe 10, der Scheibentopf 9, und die Nabe 7 koaxial zur Mittelachse 11 liegen. Zur Bremsscheibe 10 benachbart ist am Achskörper, hier am Hals 4 des Achskörpers ein Bremsträger 12 vorgesehen, der den Hals 4 ringförmig umschließt und im Ausführungsbeispiel mit dem Hals 4 verschweißt ist. In hier nicht dargestellter Weise trägt der mit dem Achskörper fest verbundene Bremsträger 12 zumindest eine Bremszange, die in üblicher Weise die Bremsscheibe 10 übergreifend angeordnet ist und über die das bei Beaufschlagung der Bremszange wirksame Bremsmoment fahrzeugseitig in den Bremsträger 12 und die Achse 2 eingeleitet wird.

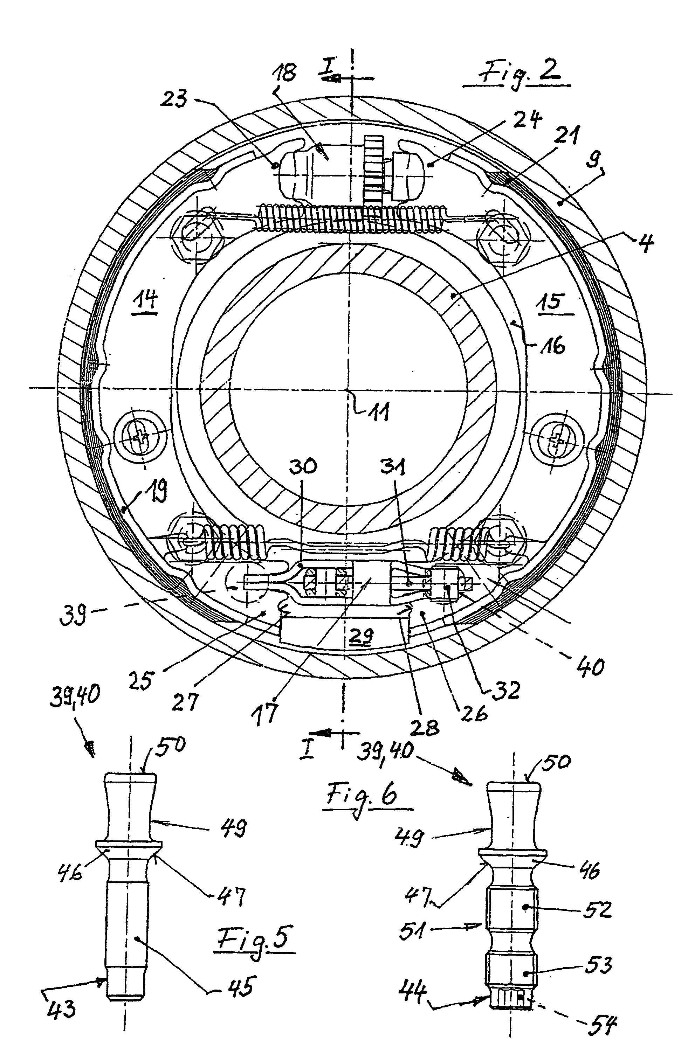

Die die Bremsscheibe 10 umfassende Fahrbremse bildet mit dem Scheibentopf 9 die Trommel einer als Feststellbremse wirkenden Trommelbremse 13, welche hier stark schematisiert dargestellt ist und, wie Figur 2 zeigt, zwei Bremsbacken 14, 15 umfaßt, welche den Achshals 4 umschließend über eine Halterplatte 16 gegeneinander beweglich verbunden sind, und welche in Umfangsrichtung gegeneinander, jeweils nahezu eine Hälfte des Achshalses 4 umspannend einerseits über ein Spreizschloß 17, und diesem bevorzugt diametral gegenüberliegend, über ein Nachstellelement 18 gegeneinander abgestützt sind. Die Bremsbacken 15 und 16 weisen jeweils sich in Achsrichtung erstreckende Tragflächen 19 auf, die über radial gerichtete Stege 20 abgestützt sind, und die die Bremsbeläge 21 tragen.

Zwischen jeweils einander gegenüberliegenden Stirnenden beider Bremsbacken 14, 15 liegen das Nachstellelement 18 und das Spreizschloß 17. Die dem Nachstellelement 18 zugeordneten Stirnenden 23, 24 der Stege 20 liegen dabei in einer zur Mittelachse 11 senkrechten Radialebene, und ebenso die daran in Umfangsrichtung anschließenden Stegteile, bis auf die den Stirnenden 23, 24 jeweils gegenüberliegenden Stirnenden 25, 26, deren Stirnseiten 27, 28 über das Spreizschloß 17 beaufschlagbar sind und, wie Figur 1 in Verbindung mit Figur 2 zeigt, in Umfangsrichtung gegen einen Ansatz 29 des Bremsträgers 12 abgestützt sind, der sich ausgehend von der Ringform des Bremsträgers 12 axial zwischen die Bremsbacken 14 und 15 erstreckt.

Das Spreizschloß 17, das in Figur 2 in die Zeichenebene geschwenkt dargestellt ist, ist in üblicher Weise aufgebaut und besteht aus der Drucklasche 30 und dem Betätigungshebel 31, der mit der Drucklasche 30 über einen Gelenkbolzen 32 schwenkbar verbunden ist. Der Gelenkbolzen 32 ist dem Ende der Drucklasche 30 zugeordnet, das von der stirnseite 27 der Bremsbacke 14 abgelegen ist, gegen die sich die Drucklasche 30 abstützt. Am Betätigungshebel 31 ist im Bereich dessen vom Gelenkbolzen 32 abgelegenen Endes der Stellantrieb 33 für das Spreizschloß 17 angelenkt, wobei der Stellantrieb 33 in bekannter Weise durch ein Bremsseil 34 gebildet ist, dessen Seele 35 am Betätigungshebel 31 einhängbar ist und dessen drucksteifer Mantel 36 gegen den Bremsträger 12 abgestützt ist. Die Anlenkung der Seele 35 am Betätigungshebel 31, der überlappend zur Drucklasche 30 zwischen deren gegabelten Schenkeln liegt, liegt zwischen dem Gelenkbolzen 32 und dem Ende der Drucklasche 30, das sich gegen die Stirnseite 27 der Bremsbacke 14 abstützt.

Wie Figur 1 zeigt ist die als Bohrung ausgebildete, den Stellantrieb 33 für die Trommelbremse 13 aufnehmende Zuführung 37 in der Schnittebene gemäß Figur 1 zur Mittelachse 11 geneigt angeordnet, wobei der sich gegen die Achsmitte öffnende Neigungswinkel im Ausführungsbeispiel bei 10° liegt.

Die Mittelachse der die Zuführung 37 bildenden Bohrung liegt somit auf einem Kegelmantel, dessen Kegelwinkel bei zur Mittelachse 11 konzentrischer Lage in der Größenordnung von 20° liegt, in Abhängigkeit von Einbaugegebenheiten aber auch eine hiervon abweichende Größe haben kann, insbesondere bis zu etwa 40°. Das Spreizschloß 17 ist entsprechend angeordnet, was bedeutet, daß die Achse des Gelenkbolzens 32 die Achse der Zuführung 37 senkrecht kreuzt und daß die zueinander parallelen Schwenkebenen von Drucklasche 30 und Betätigungshebel 31 parallel zu einer Ebene liegen, die im Bereich der Achse der Zuführung 37 den Kegelmantel tangiert, der auch die Achse der Zuführung 37 enthält.

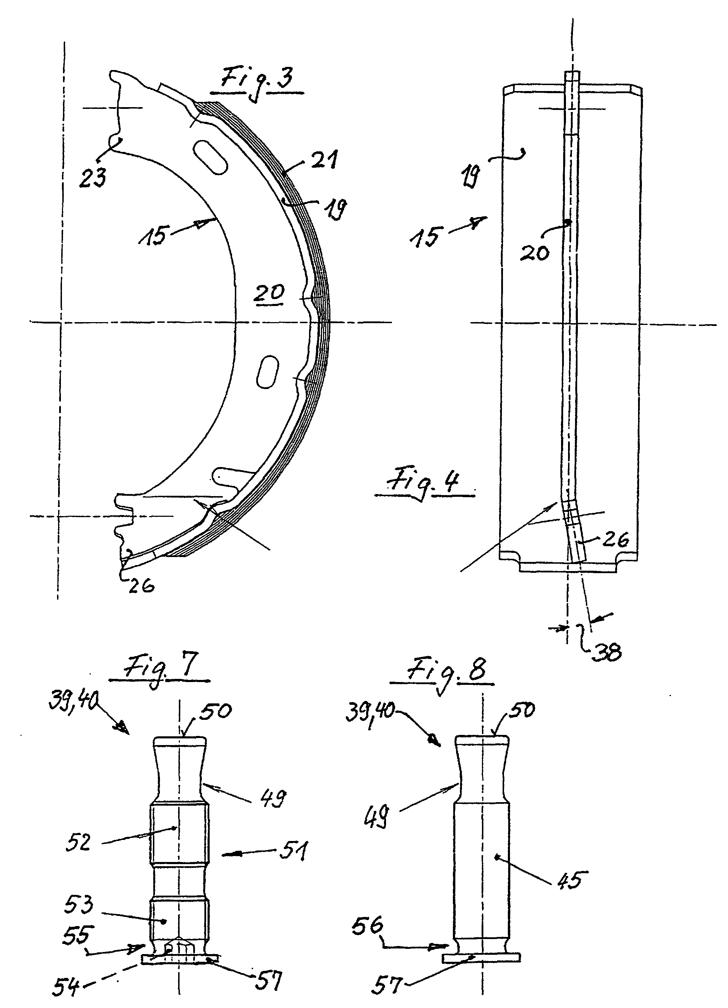

Die entsprechende Neigung des Spreizschloßes 17 wird dadurch erreicht, daß, wie Figuren 3 und 4 insbesondere zeigen und wie für die Bremsbacke 15 in Figuren 3 und 4 dargestellt, das Stirnende 26 der Bremsbacke 15, und analog das Stirnende 25 der Bremsbacke 14 zu der Radialebene, in der die Stege 20 der Bremsbacken 14, 15 im wesentlichen liegen, unter einem Winkel angestellt ist, der dem Neigungswinkel der Zuführung 37 gegenüber der Mittelachse 11 entspricht. Dieser Winkel ist in den Figuren 1 und 4 mit 38 bezeichnet. Die abgewinkelten Stirnenden 25, 26 liegen somit auf dem Mantel eines Kegels, der sich zur Fahrzeugaußenseite, also zur Radseite hin öffnet und dessen Achse mit der Mittelachse 11 zusammenfällt, wobei der Kegelwinkel komplementär zu dem Winkel des Kegels ist, dessen Mantel die Achse der Zuführung 37 enthält.

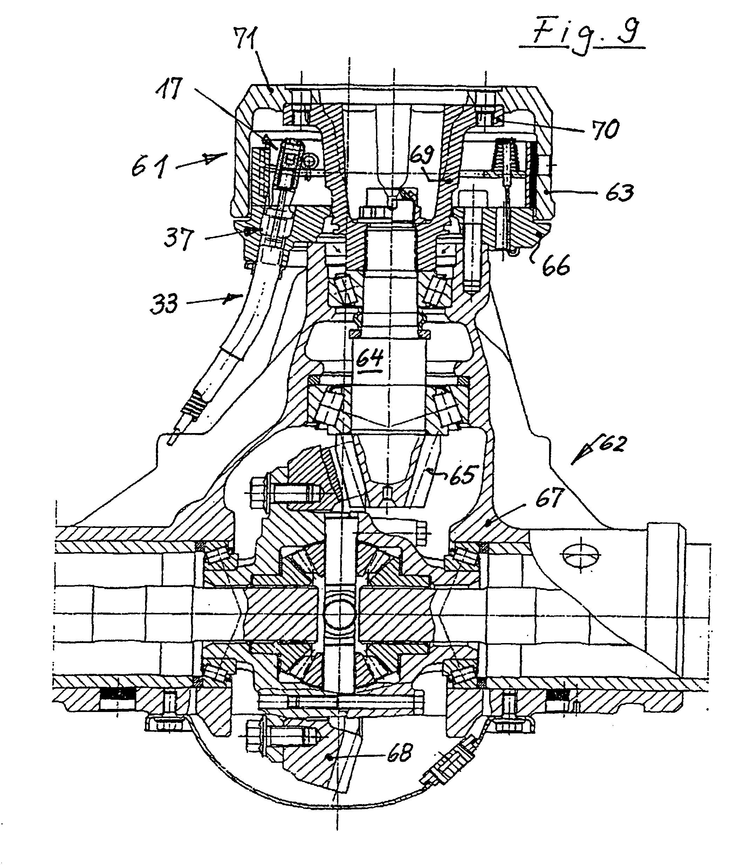

Wie Figur 1 in Verbindung mit Figur 2 zeigt ist das Spreizschloß 17 im Bereich der voneinander abliegenden Enden der Drucklasche 30 und des Betätigungshebels 31 über Stützelemente gegen den Bremsträger 12 abgestützt, die mit 39 und 40 bezeichnet sind und die beim Aufbringen einer Zugkraft über den Stellantrieb 33 die entsprechende Gegenabstützung für das Spreizschloß 17 bilden. Die Stützelemente 39, 40 sind in Aufnahmebohrungen des Bremsträgers 12 angeordnet, die beiderseits der Zuführung 37 liegen und die in der Schnittdarstellung gemäß Figur 1 strichliert eingezeichnet und mit 41 bezeichnet sind. Die Aufnahmebohrungen sind als Durchgangsbohrungen ausgebildet, und liegen, bezogen auf die Darstellung gemäß Figur 1, vor und hinter der Zeichenebene bei jeweils gleicher Neigung der Bohrungsachse, und der Zuführung 37 entsprechender Neigung. Solche bolzenförmigen Stützelemente sind in verschiedener Ausgestaltung in den Figuren 5 bis 8 dargestellt.

Die Figuren 5 und 6 zeigen Stützelemente 43 und 44, die von der Radseite her in die entsprechende Aufnahmebohrung 41 eingesetzt sind. In der Ausgestaltung gemäß Figur 5 ist dabei ein Stützelement 43 gezeigt, das in die Aufnahmebohrung 41 eingepresst und durch Preßsitz fixiert ist. Der entsprechend kalibrierte Abschnitt des Stützelementes 43 ist mit 45 bezeichnet. Weiter weist das Stützelement 43 einen Ringbund 46 auf, der einen Endanschlag bildet, also die maximale Einpresstiefe des Stützelementes 43 in den Bremsträger 12 begrenzt. Dabei ist es erfindungsgemäß zweckmäßig, die Anschlagfläche 47 des Ringbundes 46 kugelig auszubilden, so daß die der Aufnahmebohrung 41 zugeordnete Ansenkung 48 eine zur Achse der Aufnahmebohrung 41 geneigte, zur Mittelachse 11 parallele Achse 42 aufweisen kann, womit für den Produktionsprozeß auch bei erfindungsgemäß schräg eingebauten Stützelementen 43, 44 und Einbringung der Aufnahmebohrung 41 von der Achsmitte her die Ansenkung von der Gegenseite und bei zur Mittelachse 11 paralleler Werkzeugachse vorgenommen werden kann. In Folge der kugeligen Ausbildung der Anschlagfläche 47 ist ungeachtet der verschiedenen Achslagen eine Abstützung des Stützelementes über den Umfang des Ringbundes 46 möglich.

Gegenüberliegend zu dem ein Passungsteil bildenden Abschnitt 45 ist das Stützelement 43 mit einem Stützkopf versehen, der mit 49 bezeichnet ist und dessen zur Achse des Stützelementes 43 senkrechte Stirnfläche 50 eine Anlagefläche für das Spreizschloß 17 bildet. Der Stützkopf 49 ist dabei im Bereich zwischen der Stirnfläche 50 und seinem Übergang in den Ringbund 46 hinterschnitten ausgebildet, weist also eine pilzartige Kontur auf, so daß trotz radial sehr gedrängter Bauweise ein ausreichender Freiraum zur jeweiligen Bremsbacke verbleibt.

Eine weitere Ausgestaltung eines Stützelementes zeigt Figur 6 mit dem Stützelement 44, das zwar ebenfalls von der Radseite her in die Aufnahmebohrung 41 eingesetzt wird, bei dem aber die Fixierung nicht durch Preßsitz erfolgt, sondern über ein Gewinde 51, bestehend aus zwei Gewindehälften 52, 53, die mit definiertem Abstand angeordnet sind, derart, daß sich eine Verspannung und dadurch ein Verklemmen des Stützelementes 44 ergibt. Das Stützelement 44 ist bei dieser Lösung zweckmäßigerweise auf seiner dem Stützkopf 49 gegenüberliegenden Stirnseite bzw. am zugehörigen Stirnende mit einem Ansatz oder einer Aufnahme für ein Werkzeug versehen, im Ausführungsbeispiel mit einer Aufnahme 54 in Form eines Innensechskantes, so daß zwar von der Radseite her eingeschraubt wird, von der Achsmitte aus aber ein Zugriff auf das Stützelement 44 auch zu Verstellzwecken möglich ist, so daß sich eine Nachjustierung im Service und in der Montage jederzeit durchführen läßt.

Bei der Ausgestaltung gemäß Figur 7 ist ebenso wie bei der Ausgestaltung gemäß Figur 8 ein Stützelement 55 bzw. 56 gezeigt, das von der Achsmitte her in die Aufnahmebohrung 41 eingesetzt wird.

Auch bei diesem Stützelement 55 finden wieder, soweit keine Abweichungen gegeben sind, gleiche Bezugszeichen Verwendung und es ist dementsprechend der in seinem Schaft hinterschnittene Stützkopf mit 49 bezeichnet, und anschließend an den Stützkopf 49 im Übergang zum gegenüberliegenden Ende des Stützelementes 55 sind wiederum zwei beabstandete Gewindehälften 52 und 53 vorgesehen, die beim Einschrauben in ein Gegengewinde der Aufnahmebohrung 41 eine Verspannung des Stützelementes 55 in der jeweiligen Einschraubposition bedingen, die ausreichend ist, um einen Selbsthemmungseffekt zu erreichen. Gegenüberliegend zum Stützkopf 49 ist das Stützelement 55 mit einem Endanschlag in Form eines flanschartigen Bundes 57 versehen, und es ist ferner dieser Endbereich mit einer Aufnahme oder einem Ansatz für das Zusammenwirken mit einem Werkzeug versehen, über das das Stützelement 55 von der Achsmitte her in die Aufnahmebohrung 41 eingeschraubt werden kann. Die Aufnahme ist auch hier mit 54 bezeichnet und durch einen Innensechskant gebildet.

Der flanschartige Bund 57 bildet auch bei dieser Lösung einen Endanschlag, so daß über diesen, wie bei den Ausführungsbeispielen gemäß Figuren 5 und 6 gegebenenfalls eine definierte Ausgangslage vorgegeben werden kann, was sich im Hinblick auf eine schnelle und sichere Montage als zweckmäßig erweist.

Bei der Ausgestaltung gemäß Figur 8 ist das Stützelement 56, analog zum Stützelement 43 in Figur 5, mit einem Abschnitt 45 versehen, der in Bezug auf die Aufnahmebohrung 41 zumindest über Teilbereiche seiner Länge derartig kalibriert ist, daß sich ein Preßsitz ergibt. Auch bei dieser Lösung erfolgt das Einsetzen von der Achsmitte her, und es ist ausgehend von einer Erstmontagesituation, bei der das Stützelement 56 nicht bis auf den flanschartigen Bund als Endanschlag eingesetzt ist, eine Nachbesserung im Hinblick auf die richtige Positionierung des Stützelementes 56 gegenüber dem Spreizschloß 17 möglich.

Die erfindungsgemäße Lösung ist in verschiedenen Varianten vorstehend jeweils in Verbindung mit einem Bremsträger erläutert, der zu dem Achsrohr einer Starrachse feststehend angeordnet ist und diese ringförmig umschließt. Im Rahmen der Erfindung liegt aber auch eine Anwendung in Verbindung mit unabhängigen Radaufhängungen, wobei als Bremsträger dann der Radträger oder ein mit diesem verbundenes Element dient und der Radträger über Radführungsglieder mit dem Fahrzeugaufbau verbunden ist.

Eine weitere im Rahmen der Erfindung liegende Anwendung ist in Figur 9 gezeigt und in Verbindung mit der Zuordnung einer Trommelbremse 61 zum Ausgleichsgetriebe 62 gegeben, wobei die Trommel 63 mit der Welle 64 des mit dem Tellerrad 68 kämmenden Ritzels 65 verbunden ist und der Bremsträger 66 dem Getriebegehäuse 67 zugeordnet oder auch durch dieses gebildet ist. Bezüglich der Anordnung und Ausbildung des Spreizschlosses 17 und der Zuführung 37 wird auf die vorausgehende Beschreibung Bezug genommen, deren Bezugszeichen übernommen wurden. Die gezeigte Darstellung macht es möglich, die Feststellbremse in Form einer Trommelbremse 61 dem Ausgleichsgetriebe 62 zugeordnet in den auf dieses führenden Antriebsstrang zu integrieren, wobei trotz der baulich gegebenen Einschränkungen Eingriffe in das Ausgleichsgetriebe 62 vermieden werden. Andererseits läßt sich auf diese Weise eine wirkungsvolle Feststellbremse auch in Verbindung mit Fahrzeugen bzw. Achskonstruktionen von Fahrzeugen realisieren, die im radnahen Bereich, beispielsweise wegen besonderer räumlicher Enge aufgrund kleiner Raddurchmesser, eine entsprechend dimensionierte Bremsanordnung praktisch kaum zulassen, so daß die Erfindung die Möglichkeit eröffnet, zusätzlich zu radnahen Feststellbremsen eine weitere, dem Ausgleichsgetriebe zugeordnete Feststellbremse vorzusehen. Die Schrägführung des Stellantriebes 33 mit entsprechend geneigter Zuführung 37 läßt dabei eine besonders gedrungene Bauform zu. Wie aus Figur 9 ersichtlich, baut die Anordnung auch axial sehr kurz, wobei ein mit einem Übergangshals 69 versehener Anschlußflansch 70 die Möglichkeit bietet, die Trommel 63 mit ihrem Flanschbund 71 zwischen den Flansch 70 und dem hier nicht gezeigten Flansch der auf das Ausgleichsgetriebe 62 führenden Antriebswelle anzuordnen und über gemeinsame Anschlußelemente, insbesondere Flanschschrauben zu verspannen. Entsprechend kann auch der Bremsträger 66 den axialen Abschluß am Hals des Ausgleichsgetriebes 62 bilden und einen diesbezüglichen Deckel ersetzen, so daß sich eine Minimierung des Aufwandes ergibt.

## Patentansprüche

1. Bremsanordnung für Fahrzeuge mit einer Trommelbremse, insbesondere für Kraftfahrzeuge mit einer Trommelbremse als Feststellbremse, die eine gegenüber einem feststehenden Bremsträger drehbare Trommel aufweist und deren Bremsbacken, die jeweils einen zu ihrer Tragfläche für den Bremsbelag winkligen, radialen Tragsteg aufweisen, über ein Spreizschloss gegen die Trommel verspannbar sind, das zwischen einander zugewandten Stirnseiten der Tragstege der Bremsbacken gegen diese fixiert liegt und eine Drucklasche und einen Betätigungshebel umfasst, die einander überlappend quer zu einer zur Trommelachse senkrechten Radialebene gegeneinander verschwenkbar über einen eine Schwenkachse bildenden Gelenkbolzen verbunden sind, zwischen dem und der Abstützung der Drucklasche gegen die von ihr beaufschlagte Bremsbacke der Stellantrieb der Trommelbremse am Betätigungshebel angreift, wobei der Stellantrieb den Bremsträger in einer sich axial erstreckenden, zur Schwenkachse von Drucklasche und Betätigungshebel senkrechten Zuführung durchsetzt, wobei die Drucklasche und der Betätigungshebel des Spreizschlosses jeweils über ein Stützelement gegen den Bremsträger abgestützt sind und wobei die Stützelemente beiderseits der Zuführung liegen und eine zu dieser parallele Erstreckung aufweisen,
**dadurch gekennzeichnet,**
**dass** die Zuführung (37) unter einem zur Trommelachse (Mittelachse 11) geneigten Winkel (38) verläuft und die stirnseitig durch Drucklasche (30) sowie Betätigungshebel (31) des Spreizschlosses (17) beaufschlagten Endbereiche (25, 26) der Tragstege (20) zur radialen Stegebene abgewinkelt in einer zur Zuführung (37) senkrechten Ebene liegen.

2. Bremsanordnung nach Anspruch 1,
**dadurch gekennzeichnet,**
**dass** die Stützelemente (39, 40; 43, 44; 55, 56) in den Bremsträger durchsetzenden Aufnahmebohrungen (41) angeordnet sind und von der zur Trommelbremse abgelegenen, der Fahrzeugmitte zugewandten Seite des Bremsträgers in die Aufnahmebohrungen (41) einsetzbar sind.

3. Bremsanordnung nach Anspruch 2,
**dadurch gekennzeichnet ,**
**dass** ein Stützelement (55, 56) von der der Trommelbremse zugewandten Seite des Bremsträgers in die Aufnahmebohrung (41) einsetzbar ist.

4. Bremsanordnung nach einem der Ansprüche 2 oder 3,
**dadurch gekennzeichnet**,
das ein Stützelement (44; 55) nachstellbar in der Aufnahmebohrung (41) angeordnet ist.

5. Bremsanordnung nach einem der vorhergehenden Ansprüche,
**dadurch gekennzeichnet,**
**dass** ein Stützelement (43, 44; 55, 56) einen Anschlagbund (46; 57) als Endanschlag aufweist.

6. Bremsanordnung nach einem der vorhergehenden Ansprüche,
**dadurch gekennzeichnet,**
**dass** das Stützelement (43, 44; 55, 56) einen über den Bremsträger (12) in Richtung auf das Spreizschloss (17) vorstehenden Kopfteil (Stützkopf 49) aufweist und dass das Kopfteil (Stützkopf 49) in seinem vorstehenden Bereich im Übergang zwischen dem Spreizschloss (17) zugeordneter Stirnfläche (50) und Bremsträger (12) hinterschnitten ausgeführt ist.

7. Bremsanordnung nach einem der vorhergehenden Ansprüche,
**dadurch gekennzeichnet,**
**dass** das Stützelement (44, 55) über eine Gewindebohrung (52, 53) selbsthemmend in der Aufnahmebohrung (41) geführt ist.

## Claims

1. A brake arrangement for vehicles with a drum brake, in particular for motor vehicles with a drum brake as a parking brake, which has a drum which can be rotated in relation to a fixed backing plate, and brake shoes each of which has a radial bearing web for the brake lining angled in relation to its bearing surface and can be pre-tensioned against the drum by an expander lock which lies between opposing front faces of the bearing web of the brake shoes fixed in relation thereto and comprises a pressure plate and an operating lever which are connected together such that they overlap at right angles to a radial plane vertical to the drum axis and can be pivoted in relation to one another by a swivel pin forming a swivelling axis, between which swivel pin and the area in which the pressure plate rests against the brake shoe applied to it, the actuator of the drum brake acts upon the operating lever, the actuator moving the back plate through a guide which extends axially and lies vertical to the swivelling axis of the pressure plate and the operating lever, the pressure plate and the operating lever of the expander lock being supported against the back plate by a supporting element and the supporting elements lying on both sides of the guide and extending in parallel thereto,
**characterised in that**
the guide (37) runs at an angle (38) to the drum axis (centre axis (11)) and the front faces of the end areas (25, 26) of the bearing webs (20) to which the pressure plate (30) and the operating lever (31) are applied lie in a plane vertical to the guide (37) angled in relation to the radial web plane.

2. A brake arrangement in accordance with claim 1,
**characterised in that**
the supporting elements (39, 40; 43, 44; 55, 56) are positioned in the receiving holes (41) which pass through the back plate and can be inserted into the receiving holes (41) from the side of the back plate away from the drum brake facing the centre of the vehicle.

3. A brake arrangement in accordance with claim 2,
**characterised in that**
a supporting element (55, 56) can be inserted into the receiving hole (41) from the side of the back plate facing the drum brake.

4. A brake arrangement in accordance with one of claims 2 or 3,
**characterised in that**
a supporting element (44; 55) is positioned in the receiving hole in such a manner that it can be adjusted.

5. A casting tool in accordance with one of the preceding claims,
**characterised in that**
a supporting element (43, 44; 55, 56) has a stop collar (46; 57) as an end stop.

6. A brake arrangement in accordance with one of the preceding claims,
**characterised in that**
the supporting element (43, 44; 55, 56) has a head part (supporting head (49)) which projects beyond the back plate (12) towards the expander lock (17) and that the projecting area of the head part (supporting head (49)) is undercut in the area of transition from the front face (50) associated with the expanding lock (17) to the back plate (12).

7. A brake arrangement in accordance with one of the preceding claims,
**characterised in that**
the supporting element (44, 55) is guided into the receiving hole (41) in a self-locking manner by a threaded hole (52, 53).

## Revendications

1. Installation de freinage pour véhicules comportant un frein à tambour, en particulier pour véhicules automobiles comportant un frein à tambour à titre de frein de stationnement, qui comprend un tambour rotatif par rapport à un support de frein stationnaire et dont les mâchoires de frein munies chacune d'une barrette porteuse radiale angulaire par rapport à leur surface de support de garniture de frein sont susceptibles d'être serrées contre le tambour via un mécanisme à écartement qui se situe entre des faces frontales tournées les unes vers les autres des barrettes porteuses des mâchoires de frein en étant fixée contre celles-ci et qui comprend une patte de compression et un levier d'actionnement qui sont reliés l'un à l'autre en chevauchement mutuel avec faculté de pivotement mutuel transversalement à un plan radial perpendiculaire à l'axe du tambour via un pivot d'articulation formant un axe de pivotement, et entre celui-ci et l'appui de la patte de compression contre la mâchoire de frein sollicitée par celle-ci attaque l'entraînement de positionnement du frein à tambour sur le levier d'actionnement, dans laquelle l'entraînement de positionnement traverse le support de frein dans un passage s'étendant axialement et perpendiculaire à l'axe de pivotement de la patte de compression et du levier d'actionnement, la patte de compression et le levier d'actionnement du mécanisme à écartement sont appuyés chacun via un élément d'appui contre le support de frein, et les éléments d'appui se trouvent des deux côtés du passage et présentent une extension parallèle à celui-ci
**caractérisée en ce que**
le passage (37) s'étend sous un angle (38) incliné par rapport à l'axe de tambour (axe médian 11) et les zones d'extrémité (25, 26) des barrettes porteuses (20), zones qui sont sollicitées du côté frontal par la patte de compression (30) ainsi que par le levier d'actionnement (31) du mécanisme à écartement (17), se situent en étant coudées par rapport au plan radial des barrettes dans un plan perpendiculaire au passage (37).

2. Installation de freinage selon la revendication 1, **caractérisée en ce que** les éléments d'appui (39, 40 ; 43, 44 ; 55, 56) sont agencés dans des perçages de logement (41) traversant le support de frein et sont susceptibles d'être mis en place dans les perçages de logement (41) depuis le côté du support de frein détourné du frein à tambour et tourné vers le centre du véhicule.

3. Installation de freinage selon la revendication 2, **caractérisée en ce qu'**un élément d'appui (55, 56) est susceptible d'être mis en place dans le perçage de logement (41) depuis le côté du support de frein tourné vers le frein à tambour.

4. Installation de freinage selon l'une ou l'autre des revendications 2 et 3, **caractérisée en ce qu'**un élément d'appui (44 ; 55) est agencé de façon ré-ajustable dans le perçage de logement (41).

5. Installation de freinage selon l'une des revendications précédentes,
**caractérisée en ce qu'**un élément d'appui (43, 44 ; 55, 56) comprend un collier de butée (46 ; 57) à titre de butée finale.

6. Installation de freinage selon l'une des revendications précédentes,
**caractérisée en ce que** l'élément d'appui (43, 44 ; 55, 56) comprend une partie de tête (tête d'appui 49) qui dépasse au-delà du support de frein (12) en direction du mécanisme à écartement (17), et **en ce que** la partie de tête (tête d'appui 49) est réalisée en contre-dépouille dans sa zone en dépassement au niveau de la transition entre la surface frontale (50) associée au mécanisme écartement (17) et le support de frein (12).

7. Installation de freinage selon l'une des revendications précédentes,
**caractérisée en ce que** l'élément d'appui (44, 55) est guidé avec auto-blocage dans le perçage de logement (41) via un perçage taraudé (52, 53).
